# FASCICULE DE BREVET EUROPEEN

(11) **EP 0 769 248 B1**
(45) Date de publication et mention de la délivrance du brevet: **17.01.2001**
(21) Numéro de dépôt: 96480096.5
(22) Date de dépôt: 19.09.1996
(51) Int. Cl.: A22C 25/02

(54) **Installation pour laver des poissons et suppport de poisson adapté pour une telle installation**
Vorrichtung zum Waschen von Fischen und Fisch-Träger für diese Vorrichtung
Fish washing installation and fish-support for such an installation

(30) Priorité: 21.09.1995 FR 9511285
(43) Date de publication de la demande: 23.04.1997
(73) Titulaire: LABEYRIE S.A., 40235 St Vincent de Tyrosse Cedex (FR)
(72) Inventeur: Bernard, Liliane, 40300 Pey (FR)
(74) Mandataire: Thibon-Littaye, Annick

(56) Documents cités:
- WO-A-90/03115
- FR-A- 2 616 625
- GB-A- 2 216 770
- US-A- 3 546 738
- US-A- 4 563 793
- PATENT ABSTRACTS OF JAPAN vol. 12, no. 117 (C-487), 13 Avril 1988 & JP-A-62 239942 (FOOD SUPPLY JIYASUKO CHUBU), 20 Octobre 1987,

## Description

L'invention concerne une installation pour laver des poissons.

Lorsque l'on souhaite préparer industriellement les poissons afin de les fumer, de les cuisiner, de les conditionner ou de les conserver, il est important de les nettoyer préalablement de manière approfondie.
En effet, les poissons fraîchement pêchés sont recouverts d'une couche de mucus. Cette couche de mucus collecte diverses impuretés et saletés qu'il est nécessaire d'éliminer. De plus, cette couche de mucus rend les poissons glissants et difficiles à manier.
Par ailleurs, les poissons qui ont été vidés doivent être nettoyés intérieurement, de façon à éliminer les déchets restants et les traces de liquides et de sang.
Les installations pour laver les poissons comportent généralement un moyen de convoyage des poissons vidés à travers un tunnel de lavage, dans lequel des jets de liquide de lavage et/ou des brosses nettoient l'extérieur et éventuellement l'intérieur des poissons.
Par exemple, le document WO 90/03115 décrit une installation de ce type, dans laquelle les poissons sont convoyés dans l'installation en étant saisis et maintenus entre deux courroies latérales mobiles. Le nettoyage extérieur des poissons est assuré par des buses de projection de liquide et une ou des brosses disposées au-dessus de la voie de convoyage des poissons. Pour le nettoyage de l'intérieur, les poissons viennent enjamber et se déplacer le long d'un élément central comportant des buses de projection de liquide et une ou des brosses.
Un tel dispositif est de construction onéreuse et compliquée. Les poissons sont soumis à de nombreuses friction tant de la part des courroies que de l'élément central et des brosses, ce qui détériore leur peau et leur chair. Par ailleurs, les buses de l'élément central peuvent facilement se boucher. Les brosses doivent être périodiquement changées. Enfin, l'adaptation de l'installation à des poissons de formes et de dimensions différentes est difficile à réaliser.

Un but de l'invention est de simplifier une installation de ce type, afin de fournir une installation fiable et efficace pour exécuter cette fonction de nettoyage des poissons aussi bien extérieurement qu'intérieurement, sans détérioration de l'aspect ni de la texture des poissons.
Un autre but de l'invention est de fournir une installation susceptible de laver des poissons de formes et de dimensions différentes.

A cet effet, l'installation pour laver des poissons selon l'invention comprenant un bâti portant un tunnel de lavage ouvert à ses extrémités amont et aval et un bac de récupération, disposé au-dessous du tunnel de lavage, raccordé à une évacuation, ainsi qu'un moyen de convoyage des poissons à travers le tunnel de lavage et des moyens de nettoyage des poissons à l'intérieur du tunnel de lavage, est caractérisée par le fait que les moyens de nettoyage sont au moins un ensemble de rampes de projection d'un liquide de lavage disposées sur la paroi interne du tunnel de lavage et comportant des buses de projection, dirigées vers l'intérieur du tunnel de lavage, reliées à un réservoir de liquide et un système de projection de liquide de lavage, et que le moyen de convoyage des poissons est constitué par un ensemble de supports individuels pour des poissons, circulant dans ce tunnel de lavage, sur lesquels les poissons vidés sont disposés.
Le tunnel de lavage peut être divisé en plusieurs sections, chaque section comprenant un ensemble indépendant de rampes de projection de liquides de lavage.
Les rampes présentent avantageusement des buses supérieures en partie supérieure du tunnel, des buses latérales sur les côtés du tunnel et des buses inférieures en partie inférieure du tunnel, ces buses étant dirigées vers l'intérieur du tunnel.
Avantageusement, les buses sont orientables.
La circulation des supports de poissons est généralement assurée par le fait que les supports sont montés sur au moins une chaîne formant une boucle de circulation traversant le tunnel de lavage. Selon l'invention, les supports sont avantageusement conformés en saillie vers le haut pour porter le poisson par l'intérieur de sa cavité, cette saillie étant allongée longitudinalement et présentant des parois largement ajourées pour permettre le passage des projections de liquide de nettoyage.
De préférence, les supports présentent une section transversale s'élargissant vers le bas, pour ouvrir la cavité du poisson.
Par exemple, les supports peuvent présenter une forme générale de dièdre s'élargissant vers le bas.
Plus particulièrement, les supports peuvent être formés d'arceaux transversaux en U ou en V inversé, reliés par des barres longitudinales.
L'une supérieure des barres peut en outre présenter des arêtes dirigées vers le haut pour bloquer le poisson en position.
L'invention concerne également un tel support de poisson destiné à une installation pour laver des poissons.

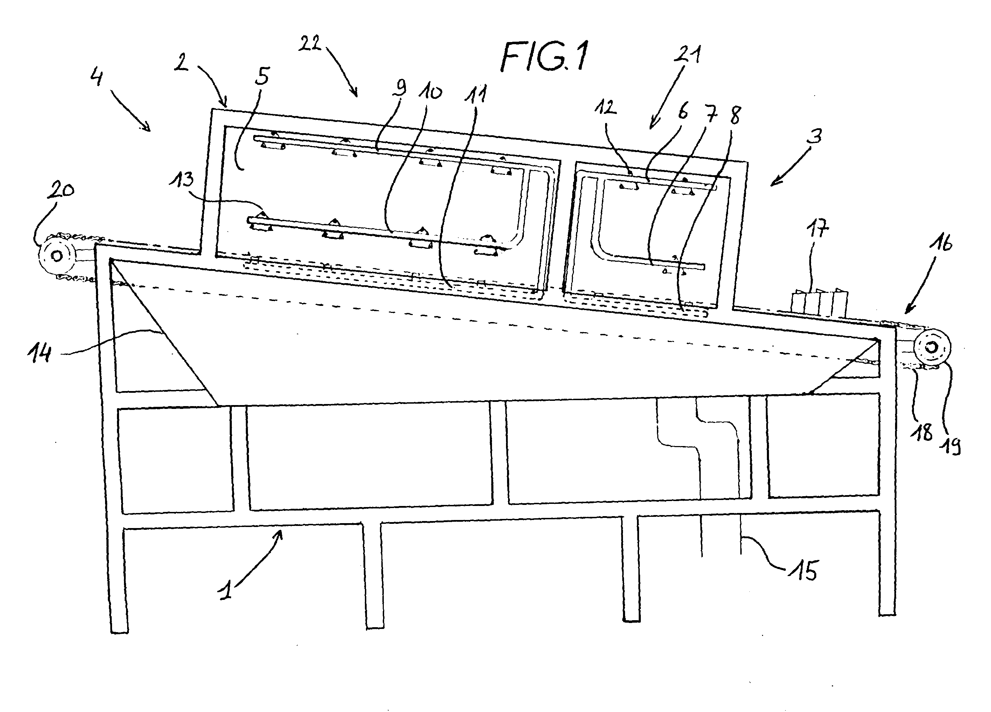

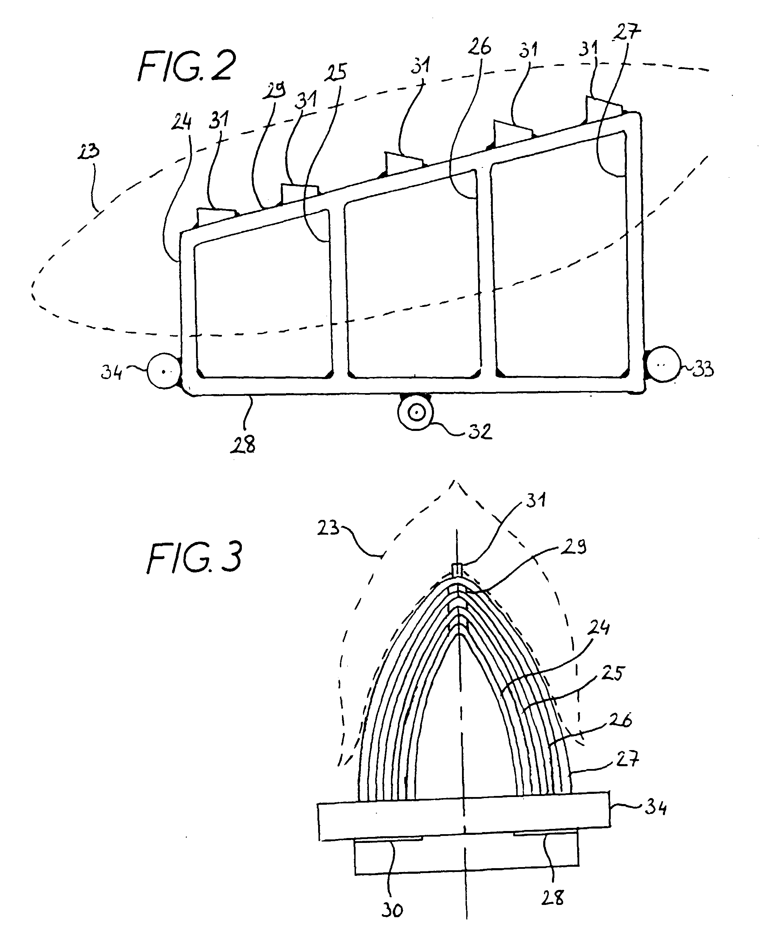

On comprendra mieux l'invention à la lecture de la description d'un exemple de réalisation d'une installation pour laver des poissons selon l'invention, effectuée en référence aux dessins parmi lesquels :
. la figure 1 est une vue latérale d'une installation pour laver des poissons selon l'invention ;
. la figure 2 est une vue latérale d'un support de poisson de l'installation de la figure 1 ;
. la figure 3 est une vue frontale du support de poisson de la figure 2.

L'installation de lavage représentée sur la figure 1 comprend un bâti 1, à la partie supérieure duquel est disposé un tunnel de lavage 2. Le tunnel de lavage 2 est ouvert à une extrémité amont 3 d'entrée des poissons à laver et à une extrémité aval 4 de sortie des poissons lavés. La présence de ce tunnel de lavage 2 est destinée notamment à assurer la protection des opérateurs et à éviter les projections de liquides autour de l'installation.
La partie supérieure du tunnel de lavage 2 est formée ici d'une succession de panneaux amovibles transparents 5. Ces panneaux 5 sont, soit posés et éventuellement verrouillés sur le bâti 1, soit montés par des articulations sur ce bâti 1, de façon à permettre d'accéder à l'intérieur du tunnel de lavage 2. Le fond du tunnel est ouvert, ou constitué par une plaque ajourée ou une grille (non visible sur la figure 1), laissant passer les liquides, mais retenant les impuretés de grande taille ou les poissons.
A l'intérieur du tunnel de lavage 2 sont disposées des rampes de projection 6, 7, 8, 9, 10, 11 de liquide pour laver des poissons. Ces rampes 6 à 11 sont disposées du côté intérieur de la paroi du tunnel à proximité de celle-ci, et comportent des buses de projection 12, 13 dirigées vers l'intérieur du tunnel de lavage 2. Il est important que les rampes de projection comportent des buses disposées généralement en partie supérieure du tunnel et en partie inférieure. Les premières permettent le nettoyage de l'extérieur des poissons, les secondes le nettoyage de l'intérieur de ceux-ci.
Par exemple, les rampes sont ici des rampes supérieures 6, 9, des rampes latérales 7, 10 et des rampes inférieures 8, 11. Cette disposition des rampes de projection 12, 13 permet de projeter un ou des liquides de lavage à l'intérieur du tunnel à la fois par le dessus, par les côtés et par le dessous.
Les buses peuvent être à orientation fixe, ou bien être orientables, afin de pouvoir adapter la direction du jet par exemple à la forme et la dimension des poissons lavés. La disposition des rampes et la possibilité d'orienter les buses permettent d'assurer efficacement le nettoyage des poissons aussi bien extérieurement qu'intérieurement
Le ou les liquides de lavage projetés par les rampes 6 à 11 sont récupérés dans un bac de récupération 14 situé sous le tunnel de lavage 2 sur la totalité de sa longueur, et porté par le bâti 1. Ce bac de récupération 14 est raccordé à une canalisation 15 d'évacuation des liquides de lavage.
Pour faciliter l'évacuation des liquides de lavage, le tunnel de lavage 2 est incliné entre l'amont et l'aval. Par exemple, le tunnel de lavage 2 est ici en pente montante de l'amont vers l'aval.
Le bâti 1 porte également une boucle de circulation 16 de supports individuels de poissons 17 à l'intérieur du tunnel de lavage 2. Cette boucle de circulation 16 est formée ici par une chaîne 18 à laquelle sont fixés à intervalles réguliers les supports individuels 17, qui sont destinés à porter les poissons à travers le tunnel de lavage 2.
La chaîne 18 circule autour de pignons d'extrémité amont 19 et aval 20 et de pignons intermédiaires, de manière à effectuer un trajet de lavage au cours duquel les supports 17 circulent à l'intérieur du tunnel de lavage 2 de l'amont vers l'aval, et un trajet de retour au cours duquel les supports 17 reviennent de l'aval vers l'amont en circulant au-dessous du bac de récupération 14 (trajet de retour non visible sous la figure 1). En variante, le retour des supports pourrait s'effectuer latéralement au tunnel de lavage 2.
L'entraînement de la chaîne est assuré par un moteur non représenté, par l'intermédiaire d'un pignon moteur, par exemple l'un des pignons d'extrémité 19 ou 20.
De préférence, les supports 17 sont montés sur la chaîne 18 en étant interchangeables, par exemple au moyen d'une clavette. Ainsi, on aura la possibilité, d'une part, de remplacer un support 17 défectueux ou déterioré, et d'autre part, d'utiliser des supports 17 de différente taille et forme, afin de s'adapter à la forme et aux dimensions des poissons à laver.
Des supports 17 de conformation particulièrement adaptée au lavage des poissons, par exemple dans une installation du type présenté ici, seront décrits en détails plus bas.
On précise que le tunnel de lavage 2 peut comporter une ou plusieurs sections successives correspondant à des étapes de lavage déterminées, par exemple un lavage des écailles pour éliminer le mucus, un nettoyage de la cavité, une aspersion de saumure, etc. Ainsi, dans l'exemple d'installation représentée sur la figure 1, le tunnel de lavage 2 comprend une section de nettoyage 21 en amont et une section de rinçage 22 en aval.
A cet effet, les rampes 6 à 8 situées dans la section amont 21 forment un premier ensemble de nettoyage connecté à un premier réservoir contenant un mélange d'eau et d'acide (non représenté), et les rampes 9 à 11 situées dans la section aval 22 forment un ensemble de rinçage connecté à un second réservoir d'eau douce (non représenté).
Bien entendu, le bac de récupération 14 pourrait de manière correspondante être divisé en sections connectées chacune à une évacuation spécifique, de manière à évacuer sélectivement les liquides de lavage de chacune des sections. Egalement, l'évacuation 15 pourrait être remplacée par un ou des circuits de recyclage des liquides de lavage.

Le fonctionnement de l'installation pour laver des poissons selon l'invention est le suivant.
Un opérateur placé au niveau de l'extrémité amont 3 de l'installation dispose les poissons destinés à être lavés sur les supports 17 au fur et à mesure de leur passage à l'extrémité amont 3.
Les poissons sont alors transportés à travers le tunnel de lavage 2, en étant aspergés par les projection des rampes 6 à 11, de façon à être lavés aussi bien à l'extérieur qu'à l'intérieur.
Un second opérateur placé au niveau de l'extrémité aval 4 enlève les poissons lavés de leur support 17 simplement en les soulevant, ou bien l'opération s'effectue automatiquement lors du basculement du support 17 autour du pignon aval 20.
La boucle de circulation 16 permet de ramener les supports 17 de l'aval vers l'amont au-dessous du bac de récupération 14.

On décrira maintenant plus en détails, en référence aux figures 2 et 3, un exemple de support de poisson 17 qui peut être utilisé dans l'installation selon l'invention.
Ce support 17 présente une forme générale de saillie vers le haut, allongée longitudinalement et présentant des parois largement ajourées, sur laquelle on dispose un poisson vidé 23 (représenté en trait interrompu) par sa cavité. Le poisson 23 étant ainsi soutenu par le support 17 au niveau de sa cavité, l'extérieur du poisson 23 est totalement libre et accessible aux projections de liquide de lavage, et peut être très facilement nettoyé. Comme les parois du support 17 sont largement ajourées, les projections de liquide de lavage pénètrent et arrosent également l'intérieur de la cavité, de façon à nettoyer l'intérieur du poisson 17.
Le support 17 représenté ici présente une section s'élargissant vers le bas, afin que lorsque l'on dispose le poisson vidé 23 sur le support, les flancs du poisson soient maintenus écartés. De cette façon, la cavité du poisson 23 est largement ouverte, ce qui permet aux buses de projection inférieures de bien la nettoyer. L'élargissement du support 17 doit être suffisant pour bien ouvrir les flancs du poisson, mais sans déchirer ou détériorer la chair de ses flancs.
Cette forme d'écarteur est avantageusement un dièdre ouvert vers le bas, les parois latérales du dièdre étant le plus possible ajourées pour le passage des jets de projection.
Le dièdre est réalisé ici par une succession longitudinale d'arceaux transversaux en U ou en V inversé 24, 25, 26, 27 reliés par des barres longitudinales respectivement 28, 29, 30.
L'une supérieure 29 des barres comporte en outre des arêtes de blocage 31 dirigées vers le haut, qui permettent de retenir le poisson en position. La barre supérieure 29 est en outre inclinée de l'avant vers l'arrière. Ainsi, lorsque le poisson 23 est disposé sur le support 17, il prend une position inclinée de l'avant vers l'arrière, et sa cavité est encore plus accessible aux jets de projection de liquide de lavage.
Bien entendu, le support 17 comporte un dispositif de fixation 32 sur la chaîne 18, qui est par exemple destiné à fixer chaque support 17 sur un seul maillon de la chaîne 18, afin de conserver la flexibilité de la chaîne 18.
Pour assurer la stabilité des supports 17 au cours du passage à l'intérieur du tunnel de lavage 2, le bâti 1 comportera avantageusement des surfaces de guidage longitudinal et latéral (non représentées sur les figures) sur lesquelles reposent et coulissent les barres inférieures 28, 30 des supports 17. De manière plus élaborée, les supports 17 peuvent présenter comme représenté des patins de guidage 33, 34 coopérant avec des rails de guidage du bâti 1, au moins le long du trajet de lavage.
On précise que la forme et les dimensions précises des supports 17 sont choisies en fonction de la forme et des dimensions des poissons 23 à laver, et notamment de leur cavité, par laquelle les poissons 23 sont disposés sur le support 17.

## Revendications

1. Installation pour laver des poissons, comprenant un bâti (1) portant un tunnel de lavage (2) ouvert à ses extrémités amont (3) et aval (4) et un bac de récupération (14), disposé au-dessous du tunnel de lavage (2), raccordé à une évacuation (15), ainsi qu'un moyen de convoyage des poissons à travers le tunnel de lavage (2), constitué par un ensemble de supports individuels (17) pour des poissons circulant dans le tunnel de lavage (2) et des moyens de nettoyage des poissons à l'intérieur du tunnel de lavage (2), constitués par au moins un ensemble de rampes (6 à 8, 9 à 11) de projection d'un liquide de lavage disposées sur la paroi interne du tunnel de lavage (2) et comportant des buses de projection dirigées vers l'intérieur du tunnel de lavage (2), reliées à un réservoir de liquide et un système de projection de liquide de lavage,
caractérisé par le fait que les rampes (6 à il) comportent au moins des buses supérieures en partie supérieure du tunnel (2) et des buses inférieures en partie inférieure du tunnel (2), ces buses étant dirigées vers l'intérieur du tunnel (2), et par le fait que les supports individuels (17) sont conformés en saillie vers le haut, cette saillie étant allongée longitudinalement et présentant des parois largement ajourées pour porter un poisson vidé (23) par l'intérieur de sa cavité.

2. Installation selon la revendication 1, caractérisée par le fait que le tunnel de lavage (2) est divisé en plusieurs sections (21, 22), chaque section (21 ou 22) comprenant un ensemble indépendant de rampes (6 à 8 ou 9 à 11) de projection de liquides de lavage.

3. Installation selon l'une quelconque des revendications 1 ou 2, carctérisée par le fait que les rampes (6 à 11) comportent en outre des buses latérales sur les côtés du tunnel (2), ces buses étant également dirigées vers l'intérieur du tunnel (2).

4. Installation selon l'une quelconque des revendications 1 à 3, caractérisé par le fait que les buses sont orientables.

5. Installation selon l'une quelconque des revendications 1 à 4, caractérisée par le fait que les supports (17) de poissons sont montés sur au moins une chaîne (18) formant une boucle de circulation (16) traversant le tunnel de lavage (2).

6. Installation selon l'une quelconque des revendications 1 à 5, caractérisée par le fait que les supports individuels (17) présentent une section transversale s'élargissant vers le bas de façon à ouvrir largement la cavité du poisson (23).

7. Installation selon la revendication 6, caractérisée par le fait que les supports individuels (17) sont formés d'arceaux transversaux en U ou en V inversé (24 à 27), reliés par des barres longitudinales (28 à 30).

8. Installation selon la revendication 7, caractérisé par le fait que l'une supérieure (29) des barres (28 à 30) présente des arêtes (30) dirigées vers le haut pour bloquer le poisson (23) en position.

9. Support individuel de poisson pour une installation selon l'une quelconque des revendications 1 à 5, caractérisé par le fait qu'il est conformé en saillie vers le haut, allongée longitudinalement et présentant des parois largement ajourées pour porter un poisson vidé (23) par l'intérieur de sa cavité.

10. Support individuel selon la revendication 9, caractérisé par le fait qu'il présente une section transversale s'élargissant vers le bas, de façon à ouvrir largement la cavité du poisson (23).

11. Support individuel selon la revendication 10, caractérisé par le fait qu'il est formé d'arceaux transverseaux en U ou en V inversé (24 à 27), reliés par des barres longitudinales (28 à 30).

12. Support individuel selon la revendication 11, caractérisé par le fait que l'une supérieure (29) des barres (28 à 30) présente des arêtes (30) dirigées vers le haut pour bloquer le poisson (23) en position.

## Patentansprüche

1. Vorrichtung zum Waschen von Fischen, umfassend einen Rahmen (1), der einen Waschtunnel (2) trägt, der an seinen Enden stromaufwärts (3) und stromabwärts (4) offen ist, und ein Rückgewinnungsbecken (14), das unter dem Waschtunnel angeordnet ist und an einen Ablauf (15) angeschlossen ist, sowie Mittel zur Beförderung der Fische durch den Waschtunnel hindurch, die durch einen Satz individueller Träger (17) für im Waschtunnel (2) zirkulierende Fische gebildet sind, und Reinigungseinrichtungen für Fische im Inneren des Waschtunnels (2), die durch mindestens einen Satz von Rampen (6 bis 8, 9 bis 11) zum Auswerfen von Waschflüssigkeit gebildet sind, die auf der Innenwand des Waschtunnels (2) verteilt sind und Auswerfspritzdüsen umfassen, die auf das Innere des Waschtunnels (2) gerichtet und mit einem Flüssigkeitsvorratsbehälter und einem Auswerfsystem für Waschflüssigkeit verbunden sind, **dadurch gekennzeichne**t, dass die Rampen (6 bis 11) mindestens obere Auswerfspritzdüsen im oberen Teil des Tunnels (2) und untere Auswerfspritzdüsen am unteren Teil des Tunnels (2) aufweisen, wobei die Spritzdüsen auf das Innere des Tunnels (2) gerichtet sind, und **dadurch gekennzeichnet**, dass die individuellen Träger (17) mit nach oben gerichteten Vorsprüngen versehen sind, die in Längsrichtung verlängert sind und weitreichend durchbrochene Wände aufweisen, um einen in der Bauchhöhle ausgenommenen Fisch (23) zu tragen.

2. Vorrichtung nach Anspruch 1, **dadurch gekennzeichnet**, dass der Waschtunnel (2) in mehrere Abschnitte (21, 22) unterteilt ist, wobei jeder Abschnitt (21 oder 22) einen unabhängigen Satz von Rampen (6 bis 8 oder 9 bis 11) zum Auswerfen von Waschflüssigkeiten aufweist.

3. Vorrichtung nach einem der Ansprüche 1 oder 2, **dadurch gekennzeichnet**, dass die Rampen (6 bis 11) zusätzlich seitliche Spritzdüsen auf den Seiten des Tunnels (2) tragen, wobei die Spritzdüsen gleichermaßen auf das Tunnelinnere (2) gerichtet sind.

4. Vorrichtung nach einem der Ansprüche 1 bis 3, **dadurch gekennzeichnet,** dass die Spritzdüsen einstellbar sind.

5. Vorrichtung nach einem der Ansprüche 1 bis 4, **dadurch gekennzeichnet,** dass die Fischträger (17) auf mindestens einem Fördermittel montiert sind, das eine Kreislaufschleife (16) durch den Waschtunnel (2) hindurch bildet.

6. Vorrichtung nach einem der Ansprüche 1 bis 5, **dadurch gekennzeichnet**, dass die individuellen Träger (17) einen Querabschnitt aufweisen, der sich nach unten hin vergrößert, um die Bauchhöhle des Fisches (23) weitreichend zu öffnen.

7. Vorrichtung nach Anspruch 6, **dadurch gekennzeichnet,** dass die individuellen Träger (17) aus kleinen Bögen in Querrichtung in Form von umgekehrtem U oder umgekehrtem V (24 bis 27) ausgebildet sind, die durch Stäbe in Längsrichtung (28 bis 30) verbunden sind.

8. Vorrichtung nach Anspruch 7, **dadurch gekennzeichnet,** dass ein über den Stäben (28 bis 30) liegender Stab (29) nach oben gerichtete Stege (30) wiedergibt, um den Fisch (23) in Position zu arretieren.

9. Individueller Fischträger für eine Vorrichtung nach einem der Ansprüche 1 bis 5, **dadurch gekennzeichnet**, dass er mit aufwärtsgerichtetem Vorsprung gebildet ist, der in Längsrichtung verlängert ist und Wände bildet, die weitreichend durchbrochen ist, um einen Fisch (23) zu tragen, dessen Bauchhöhle ausgeweidet ist.

10. Individueller Träger nach Anspruch 9, **dadurch gekennzeichnet**, dass er einen Querabschnitt aufweist, der sich nach unten hin vergrößert, um die Bauchhöhle des Fisches (23) weitreichend zu öffnen.

11. Individueller Träger nach Anspruch 10, **dadurch gekenn**zeichnet, dass er aus kleinen Bögen in Querrichtung in Form von umgekehrtem U oder umgekehrtem V (24 bis 27) ausgebildet sind, die durch Stäbe in Längsrichtung (28 bis 30) verbunden sind.

12. Individueller Träger nach Anspruch 11, **dadurch gekennzeichnet**, dass ein über den Stäben (28 bis 30) liegender Stab (29) nach oben gerichtete Stege (30) wiedergibt, um den Fisch (23) in Position zu arretieren.

## Claims

1. Fish washing installation comprising a frame (1) carrying a washing tunnel (2) open at its upstream (3) and downstream (4) ends and a recovery bath (14), positioned below the washing tunnel (2), connected to a discharge (15), as well as means for conveying the fish through the washing tunnel (2) consisting of an assembly of individual supports (17) for the fish moving through the washing tunnel (2) and means for cleaning the fish inside the washing tunnel (2), consisting of at least one assembly of banks (6 to 8, 9 to 11) for spraying a washing liquid positioned on the inner wall of the washing tunnel (2) and comprising spray nozzles directed to the inside of the washing tunnel (2) connected to a liquid reservoir and a system for spraying the washing liquid,
characterized in that the banks (6 to 11) include at least upper nozzles in the upper part of the tunnel (2) and lower nozzles in the lower part of the tunnel (2), these nozzles being directed towards the inside of the tunnel (2) and in that the individual supports (17) are formed projecting upwards, extending longitudinally and having largely perforated walls for carrying a gutted fish (23) inside its cavity.

2. Installation according to claim 1, characterized in that the washing tunnel (2) is divided into several sections (21, 22), each section (21 or 22) including an independent assembly of banks (6 to 8 or 9 to 11) for spraying washing liquids.

3. Installation according to either of claims 1 or 2, characterized in that the banks (6 to 11) additionally include lateral nozzles on the sides of the tunnel (2), these nozzles being also directed towards the inside of the tunnel (2).

4. Installation according to any one of claims 1 to 3, characterized in that the direction of the nozzles can be adjusted.

5. Installation according to any one of claims 1 to 4, characterized in that the supports (17) for the fish are mounted on at least one chain (18) forming a circulating loop (16) passing through the washing tunnel (2).

6. Installation according to any one of claims 1 to 5, characterized in that the individual supports (17) have a cross section widening out downwards so as to open wide the cavity of the fish (23).

7. Installation according to claim 6, characterized in that the individual supports (17) are formed of transverse arches in the shape of a U or an inverted V (24 to 27), linked by longitudinal bars (28 to 30).

8. Installation according to claim 7, characterized in that an upper bar (29) of the bars (28 to 30) has edges (30) directed upwards so as to lock the fish (23) in position.

9. Individual fish support for an installation according to any one of claims 1 to 5, characterized in that it is formed projecting upwards, extending longitudinally and having walls largely perforated so as to carry a gutted fish (23) by the interior of its cavity.

10. Individual support according to claim 9, characterized in that it has a cross section widening out downwards, so as to open wide the cavity of the fish (23).

11. Individual support according to claim 10, characterized in that it is formed of transverse arches in the shape of a U or an inverted V (24 to 27), linked by longitudinal bars (28 to 30).

12. Individual support according to claim 11, characterized in that an upper bar (29) of the bars (28 to 30) has edges (30) directed upwards for locking the fish (23) in position.
